(19) Europäisches Patentamt
European Patent Office
Office européen des brevets

(11) Veröffentlichungsnummer: **0 011 725**
**B1**

# (12) EUROPÄISCHE PATENTSCHRIFT

(45) Veröffentlichungstag der Patentschrift: **15.12.82**

(21) Anmeldenummer: **79104256.7**

(22) Anmeldetag: **02.11.79**

(51) Int. Cl.³: **C 08 F 20/30, C 08 F 20/58, C 08 F 12/22**

## (54) Aromatische Aldehydgruppen enthaltende Polymerisate und ein Verfahren zur Herstellung derartiger Polymerisate.

(30) Priorität: **11.11.78 DE 2848967**

(43) Veröffentlichungstag der Anmeldung:
**11.06.80 Patentblatt 80/12**

(45) Bekanntmachung des Hinweises auf die Patenterteilung:
**15.12.82 Patentblatt 82/50**

(84) Benannte Vertragsstaaten:
**AT BE DE FR GB NL**

(56) Entgegenhaltungen:
J. ORG. CHEM., Band 26, Juli 1961, Seiten 2225—2227 W. J. DALE et al.: "Substituted Styrenes. VI. Syntheses of the Isomeric Formylstyrenes and o- and m-Vinylbenzoic Acid"

CHEMICAL ABSTRACTS, Vol. 86, 1977 page 9, Nr. 171979f Columbus, Ohio, U. S. A. N. P. KAZAKOV et al.: "Electronic spectra of p-formylstyreneisoprene copolymers"

(73) Patentinhaber: **BASF Aktiengesellschaft**
**Carl-Bosch-Strasse 38**
**D-6700 Ludwigshafen (DE)**

(72) Erfinder: **Naarmann, Herbert, Dr.**
**Haardtblick 15**
**D-6719 Wattenheim (DE)**
Erfinder: **Wulff, Guenter, Dr.**
**Auf dem Patt 12**
**D-5305 Alfter-Impekoven (DE)**
Erfinder: **Akelah, Ahmed, Dr.**
**El Amam Ali Street 20**
**Kafer el Zyat (EG)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 011 725 B1

# Aromatische Aldehydgruppen enthaltende Polymerisate und ein Verfahren zur Herstellung derartiger Polymerisate

Die Erfindung betrifft neue Polymerisate die aromatisch gebundene Aldehydgruppen enthalten.

Aus der Literaturstelle "Chemical Abstracts" *86*, (1977) No. 17 1979 f est es bereits bekannt, ein o-Formylstyrol-Isopren-Copolymerisat elektronenspektrometrisch zu untersuchen.

Dieser Druckschrift ist nicht zu entnehmen, ob es sich bei dem bekannten Polymerisat um ein Produkt mit technisch verwertbaren Eigenschaften wie gute Reaktivität oder gute oberflächenaktive Eigenschaften handelt, und ob das Polymerisat für die Herstellung von Formkörpern, Überzügen oder Klebemitteln geeignet ist. Außerdem handelt es sich bei dem bekannten Polymerisat mit unbekannter Konsistenz und unbekannten mechanischen Eigenschaften um ein Styrolcopolymerisat, welches nicht die für einpolymerisierte polare Gruppen — wie Säureester- oder Säureamidgruppen — charakteristischen Eigenschaften aufweisen kann.

Der Erfindung lag die Aufgabe zugrunde, Polymerisate zu schaffen, welche die oben angeführten Nachteile nicht aufweisen und technisch verwertbar sind.

Die Aufgabe wurde gelöst durch Polymerisate mit K-Werten von 20 bis 140, die Struktureinheiten der allgemeinen Formel (I):

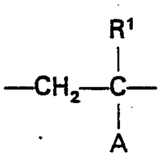 I

enthalten, worin

$R^1 = H$ oder $CH_3$ und

A = 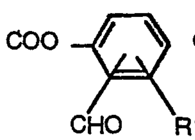 oder 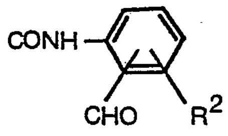

wobei $R^2 = H$, OH O-Alkyl, Alkoxyalkyl oder $O-Si(CH_3)_3$, bedeuten.

Die Polymerisate können entweder Homopolymerisate mit wiederkehrenden Einheiten der allgemeinen Formel (I) oder Co-polymerisate sein, welche die Einheiten der Formel (I) und andere Struktureinheiten einpolymerisiert enthalten, die von einer oder mehreren copolymerisierbaren olefinisch ungesättigten Verbindungen abstammen.

Bevorzugt sind Polymerisate, deren Rest $R^2$ ein H oder ein OH—, $OCH_3$—, $OSi(CH_3)_3$— oder $CH_2OCH_3$-Rest ist.

Bevorzugte Copolymerisate sind diejenigen, die als copolymerisierbare olefinisch ungesättigte Verbindungen Styrol oder Acrylsäureester enthalten.

Unter Polymerisaten mit K-Werten von 20 bis 140, die Struktureinheiten der allgemeinen Formel (I) enthalten, werden oligomere und makromolekulare Stoffe verstanden, die ganz oder im wesentlichen oder teilweise aus weiderkehrenden Einheiten der Formel

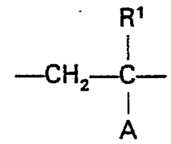

bestehen, worin der Formelteil

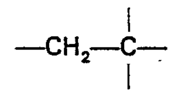

ein Teil der Polymerisatkette ist. Die Polymerisate enthalten in der Seitenkette als Substituenten den Rest $R^1$ und den oben definierten Seitenzweig A. Die allgemeine Formel beschreibt also Homopolymerisate, die nur die oben angeführten Strukturelemente (I) enthalten, als auch Copolymerisate mit einpolymerisierten copolymerisierbaren olefinisch ungesättigten Verbindungen.

Unter K-Wert der Polymerisate wird die technische Kern-größe verstanden, die zur Charakterisierung des Polymerisationsgrads eines Polymerisats üblich ist. Die K-Werte der erfindungsgemäßen Polymerisate wurden nach H. Fikentscher, Cellulosechemie *13* (1932), Seiten 58—64 und 71—74, eingewichtsprozentig in Dimethylformamid bei einer Temperatur von 25°C gemessen; dabei bedeutet $K = k \cdot 10^3$.

Die erfindungsgemäßen Polymerisate werden hergestellt durch Homopolymerisation der Verbindungen (II)

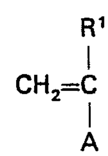 II

in denen $R^1$ und A die oben angeführte Bedeutung haben oder durch Copolymerisation einer Verbindung der allgemeinen Formel (II) mit einem oder mehreren, mit (II) copolymerisierbaren olefinisch ungesättigten Monomeren in Gegenwart von Radikale bildenden Initiatoren.

Die Verbindungen der Formel (II) sind an sich bekannt und werden hergestellt nach: R. Stoemer u. K. Behn, Ber. dtsch. Chem. Ges. *34*, 2455 bis 2460 (1901), oder W. J. Dale et al, J. Org. Chem. *26*, 2225 bis 2227 (1961), oder A. H. Ahlbrecht u. D. W. Codding, J. Amer. Chem.

Soc. *75*, 984 (1953) und C. E. Rehberg et al. J. Amer. Chem. Soc. *72*, 5199 bis 5200 (1950).

Besonders geeignete olefinisch ungesättigte Monomere der Verbindungsklasse (II) sind die Verbindungen III bis V:

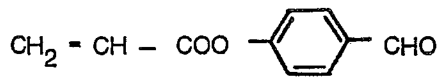

III

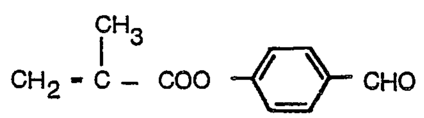

IV

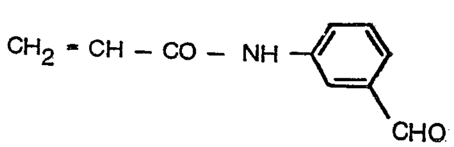

V

Die Monomeren der Formel II können jeweils für sich alleine polymerisiert werden. Selbstverständlich ist es auch möglich, Gemische verschiedener dieser Verbindungen zu copolymerisieren. Außerdem sind sie der Copolymerisation mit anderen olefinisch ungesättigten Monomeren zugänglich.

Geeignete olefinisch ungesättigte Comonomere, die gegebenenfalls mit den genannten erfindungsgemäßen Derivaten der Formeln II copolymerisiert werden können, sind beispielsweise Olefine, wie Äthylen, Propylen, Butadien, Isopren; Styrol und substituierte Styrole, wie $\alpha$-Methylstyrol, p-Chlorstyrol und p-Methylstyrol; Acryl- und Methacrylsäureester, beispielsweise des Methanols, Äthanols, Butanols oder Äthylcyclohexanols, Äthylenglykols, Propylenglykols-1,2 Butylenglykols-1,3 oder des Butylenglykols-1,4; Acryl- und Methacrylsäureamid und substituierte Amide, wie N-Methylolacrylamid oder deren Äther, wie N - Methylolacrylamidbutyläther, N - Methylolmethacrylamidmethyläther; Acryl- und Methacrylnitril; Vinylester wie Vinylacetate, Vinylpropionat; Vinyläther wie Methyl-, Äthyl- oder Alkylvinyläther mit Alkylresten mit 3 bis 6 Kohlenstoffatomen; ferner Fumar-, Malein- oder Itaconsäure, Ester dieser Säuren und Maleinsäureanhydrid. Von den vorstehend genannten Verbindungen können auch gleichzeitig zwei oder mehr mit den genannten erfindungsgemäßen Monomeren copolymerisiert werden.

Für die Herstellung von Copolymerisaten kann der Anteil an olefinisch ungesättigten aromatischen Aldehydderivaten (II) im Monomerengemisch in weiten Grenzen schwanken, beispielsweise zwischen 1 und 99, insbesondere zwischen 5 und 80, vorzugsweise zwischen 8 und 60 Gew.-%, bezogen auf das Gesamtgewicht der Monomeren.

Zur Auslösung der Polymerisation werden übliche Radikale bildende Initiatoren verwendet. Geeignete Initiatoren sind beispielsweise Wasserstoffperoxid, organische Hydroperoxide und Peroxide, wie Caproylperoxid, Lauroylperoxid, t-Butylperbenzoat, Dicumylperoxid, p-Methanhydroperoxid, Cumolhydroperoxid, Bernsteinsäureperoxid, ferner unter Polymerisationsbedingungen in Radikale zerfallende aliphatische Azoverbindungen, wie 2,2' - Azo - bis - 2,4 - dimethylvaleronitril, 2,2' - Azo - bis - isobutyronitril und analoge Azonitrile, die beispielsweise in J. Hine Reaktivität und Mechanismus in der organischen Chemie, Verlag Georg-Thieme, Stuttgart (1960), Seite 412, aufgeführt sind sowie übliche Redoxkatalysatorsysteme, wie die Systeme Kalium- oder Ammoniumpersulfat und Ascorbinsäure, Natriumhydrosulfit oder Eisen-II-salze.

Geeignet sind ferner die als Radikabildner bekannten Chelate von Übergangsmetallen, wie Chelate des Mangan(III), Kobalt(III), Kupfer(II) und Cer(IV). Im allgemeinen werden als Chelatbildner 1,3-Dicarbonylverbindungen verwendet. Als Beispiele seien genannt Mangan(III)-acetylacetonat und Kobalt(III)-acetessigester. Außerdem kann die Polymerisation auch durch Strahlung, gegebenenfalls in Gegenwart von Sensibilisatoren, wie Benzoinderivaten, ausgelöst werden.

Die Initiatoren werden im allgemeinen in einer Menge von 0,05 bis 5 Gew.-%, vorzugsweise 0,1 bis 1,0 Gew.-%, bezogen auf die Monomerenmenge, verwendet. Die optimale Menge und der optimal wirksame Initiator lassen sich durch Versuche leicht ermitteln. Die Polymerisation kann in Substanz durchgeführt werden. Vorteilhaft arbeitet man jedoch in Gegenwart von Lösungs- oder Verdünnungsmitteln. Geeignet sind beispielsweise Ketone, wie Methyläthyl- oder Methylpropylketon, Äther wie Diäthyläther, Tetrahydrofuran oder Dioxan; aliphatische, cycloaliphatische oder aromatische Kohlenwasserstoffe, wie Hexan, Heptan, Cyclohexan, Benzol oder Toluol, gut geeignet ist auch Dimethylformamid.

Die für eine Vielfalt anderer Monomerer oder Monomerengemische üblichen Suspensions- oder Lösungspolymerisationsverfahren sind auch für das neue Verfahren geeignet. Auch bezüglich der gegebenenfalls verwendeten Hilfsmittel, wie Dispergiermittel, Schutzkolloide und dergelichen unterscheidet sich das neue Verfahren nicht von bekannten.

Die Polymerisation kann in einem weiten Temperaturbereich, etwa zwischen 0 und 150°C, vorzugsweise zwischen 50 und 120°C, bei Reaktionszeiten von 1 bis 20 Stunden, vorzugsweise 2 bis 10 Stunden durchgeführt werden. Man arbeitet im allgemeinen bei Atmosphärendruck, doch können auch höhere Drucke angewendet werden. Insbesondere bei Copolymerisationen mit niedrigsiedenden Comonomeren ist die Verwendung von höheren Drucken angezeigt, um eine ausreichende Konzentration des Comonomeren im Reaktionsgemisch zu bewirken.

Die Copolymerisation der olefinisch ungesättigten Verbindungen (II) mit Äthylen oder Butadien wird vorteilhaft in aliphatischen oder aromatischen Lösungsmitteln durchgeführt, indem man die miteinander copolymerisierbaren Monomeren in das Lösungsmittel, das einen Initiator enthält, einbringt und bei erhöhtem Druck, bei Äthylen als Comonomeren bis etwa 2000 atü, polymerisiert.

Die Copolymerisation mit Acrylsäureestern wird zweckmäßig in aromatischen oder aliphatischen Kohlenwasserstoffen unter den für die Polymerisation von Acrylsäureestern bekannten Bedingungen durchgeführt.

Aufgrund der Aldehydgruppe sowie gegebenenfalls der Äthergruppe in der Seitenkette sind diese Polymerisate reaktiv und gegebenenfalls weiteren Reaktionen zugänglich. Die Polymerisate können beispielsweise intermolekular vernetzt, pfropfpolymerisiert oder vulkanisiert werden. Ferner ist es möglich die Aldehygruppe durch geeignete Reaktionspartner, die optisch aktiv sind, z.B. Aminosäuremethylester, zu modifizieren.

Die erfindungsgemäßen Polymerisate, die K-Werte von 20 bis 140, vorzugsweise von 50 bis 90 aufweisen, sind aufgrund ihres Gehaltes an Aldehydgruppen leicht vernetzbar. Sie werden beispielsweise für die Herstellung von Formkörpern, schlagfesten Massen, Überzügen oder Klebemitteln, auch im Gemisch mit anderen Kunststoffen, z.B. mit Polyäthylen, Polypropylen oder mit Mischpolymerisaten aus Vinylacetat und Äthylen, verwendet. Wegen ihrer oberflächenaktiven Eigenschaften sind die Polymerisate unter anderem auch zum Veredeln von Papier und Textilien geeignet.

Da die aldehydgruppenhaltigen Polymerisate durch Modifizieren in optisch aktive Polymerisate übergeführt werden, werden die Produkte auch als Füllkörper für die Racematrennung verwendet.

Die in den folgenden Beispielen genannten Teile beziehen sich jeweils auf das Gewicht.

Beispiel 1

*Polyacrylsäure-m-formylphenylamid*

30 Teile Acrylsäure-m-formylphenylamid (Verbindung V) (Fp 78°C) werden mit 70 Teilen Dimethylformamid und 0,5 Teilen Azodiisobutyronitril versetzt und 5 Stunden bei 80°C erhitzt und polymerisiert. Nach dem Abziehen des Lösungsmittels und Entgasen (2 h bei 120°C und 0,1 Torr) werden 23 Teile eines Polymerisates enthalten, das einen K-Wert von 49 hat.

Beispiel 2

*Polymethacrylsäure-p-formylphenylester*

30 Teile Methacrylsäure-p-formylphenylester (Verbindung IV) (Kp 0,5 Torr, 143°C) werden mit 70 Teilen Toluol und 0,5 Teilen Azodiisobutyronitril versetzt und 5 Stunden bei 80°C erhitzt und polymerisiert. Nach dem Abziehen des Lösungsmittels und Entgasen werden 21 Teile eines Polymerisats erhalten, das einen K-Wert von 43,5 hat.

**Patentansprüche**

1. Polymerisate mit K-Werten von 20 bis 140, die Struktureinheiten der allgemeinen Formel (I)

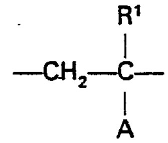 I

enthalten, worin:
$R^1 = H$ oder $CH_3$ und

A = COO 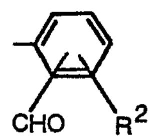 oder CONH 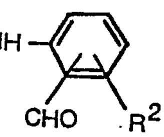

wobei $R^2 = H$, OH, O-Alkyl, Alkoxyalkyl oder O-$Si(CH_3)_3$ bedeuten.

2. Verfahren zue Herstellung von Polymerisaten mit K-Werten von 20 bis 140, die Struktureinheiten der allgemeinen Formel (I)

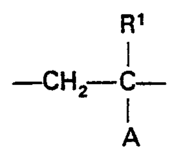 I

enthalte, worin:
$R^1 = H$ oder $CH_3$ und

A = COO 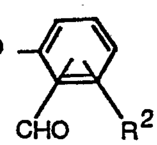 oder CONH 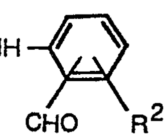

wobei $R^2 = H$, OH, O-Alkyl, Alkoxyalkyl oder O-$Si(CH_3)_3$ bedeuten, durch Polymerisation der entsprechenden ungesättigten Verbindungen der Formel (II)

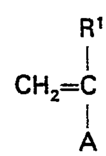 II

in Gegenwart Radikale bildender Initiatoren.

**Revendications**

1. Polymères avec une valeur K de 20 à 140, contenant des unités de structure de la formule générale (I)

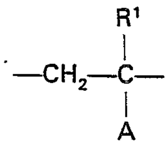 I

dans laquelle
$R^1$ = H ou $CH_3$ et

A = 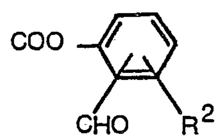 ou 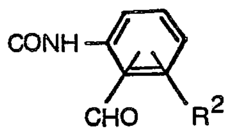

avec
$R^2$ = H, OH, O-alcoyle, alcoxy-alcoyle ou O-$Si(CH_3)_3$.

2. Procédé de préparation de polymères avec une valeur K de 20 à 140, contenant des unités de structure de la formule générale (I)

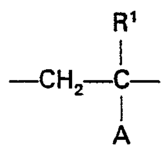 I

dans laquelle
$R^1$ = H ou $CH_3$ et

A = 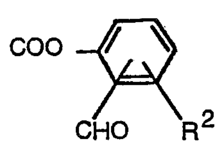 ou 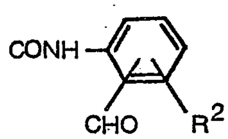

avec
$R^2$ = H, OH, O-alcoyle, alcoxy-alcoyle ou O-$Si(CH_3)_3$, par polymérisation des composés insaturés correspondants de la formula (II)

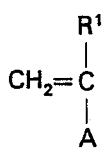 II

en présence d'initiateurs formant des radicaux.

**Claims**

1. A polymer which has a K value of from 20 to 140 and which contains structural units of the general formula (I)

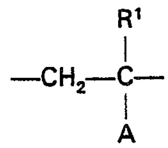 I

where $R^1$ is H or $CH_3$ and A is

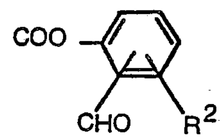 or 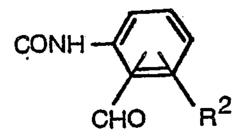

where $R^2$ is H, OH, O-alkyl, alkoxyalkyl or O-$Si(CH_3)_3$.

2. A process for the preparation of a polymer which has a K value of from 20 to 140 and which contains structural units of the general formula (I)

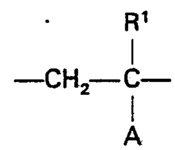 I

where $R^1$ is H or $CH_3$ and A is

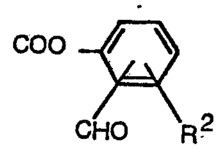 or 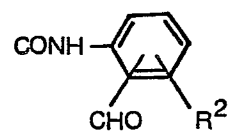

where $R^2$ is H, OH, O-alkyl, alkoxyalkyl or O-$Si(Ch_3)_3$, by polymerizing the corresponding unsaturated compound of the formula (II)

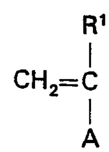 II

in the presence of a free-radical initiator.